# EUROPEAN PATENT APPLICATION

(11) **EP 2 382 870 A1**
(43) Date of publication of application: **02.11.2011**
(21) Application number: 10004576.4
(22) Date of filing: 30.04.2010
(51) Int. Cl.: A23G 9/04, A23G 9/34

(54) **Water ice composition**

(71) Applicant: Tiense Suikerraffinaderij N.V., 1150 Brussel (BE)
(72) Inventor: Wouters, Rudy, 2260 Westerlo (BE)
(74) Representative: Koster, Nico

(57) **Abstract**

The invention relates to a water ice composition containing between 5 and 40 wt.% of a sweetener composition, whereby the sweetener composition contains between 10 and 100 wt.% of carbohydrates or derivatives thereof, characterised in that essentially all the carbohydrates or derivatives thereof are non-cariogenic. The invention further relates to a water ice, consisting essentially of the water ice composition of the invention.

## Description

The invention relates to a water ice composition.

Water ice compositions are food compositions that are as such widely known. Consumers have certain expectations from frozen water ice products; these expectations include a number of organoleptic qualities such as a sufficient degree of sweetness, a flavour, and a certain 'mouthfeel'.

It is also known that it is a disadvantage of traditional water ice compositions that they are not tooth-friendly, due to the presence of certain cariogenic carbohydrates like glucose and sucrose.

Attempts have been made to make water ice more tooth-friendly; EP-A-2070424, for example, discloses that the incorporation of a buffer and fructo-oligosaccharides may improve the tooth-friendliness of a water ice. Nevertheless, a need remains for alternative water ice compositions, having the same or even an improved tooth-friendly character. It is the objective of the present invention to provide such compositions.

The objective is achieved in that the water ice composition contains between 5 and 40 wt.% of a sweetener composition, whereby the sweetener composition contains between 10 and 100 wt.% of carbohydrates or derivatives thereof, characterised in that essentially all the carbohydrates or derivatives thereof are non-cariogenic.

It is an advantage of the water ice composition of the invention that a water ice may be prepared having improved characteristics regarding tooth-friendliness.

The invention relates to a water ice composition, i.e. a food composition suitable to prepare a water ice from, through for example the simple act of freezing the water ice composition. A typical traditional water ice composition contains water, about 10 to 20 wt.% sucrose, about 5 to10 wt.% glucose, plus minor amounts of further compounds such as flavours, stabilizers, and colour-bringing compounds. As is known, a water ice is different from an ice cream, the difference lying primarily in the amount of proteins and fat. Ice creams typically contain a certain amount of fat and protein, which may originate from a dairy product, whereas fat and protein are in a water ice either not present or present in only very low amounts of typically at most 5, 4, 3, 2,1, 0.5 or even essentially 0 wt.% (based on the total water ice composition).

In the field of ice products, in particular in the field of ice cream, milk ice and sherbet products, it occurs that proteins are not designated as such but rather as part of a fraction called milk solids non-fat (MSNF). In this notation, the water ice according to the invention should preferably contain at most 6, 5, 4, 3, 2, 1, 0.5, or even essentially 0 wt.% MSNF.

As used herein, the weight percentages as given are relative to the total water ice composition or a specified section thereof (noted per occurrence). The weight percentages do not take any overrun into account. As is known in the field of ice products, overrun is an additional volume created in an ice product via the incorporation of a gas such as air. Overrun is usually, and also herein, expressed as additional volume compared to the water ice composition.

As used herein, the terms consist(ing) essentially of or 'essentially all' and equivalents have, unless noted otherwise, in relation to a composition the usual meaning that deviations in the composition may occur, but only to such an extent that the essential characteristics and effects of the composition are not materially affected by such deviations.

The water ice composition of the invention as a whole contains between 5 and 40 wt.% of a sweetener composition. As meant herein, the term sweetener composition means a sweet-tasting compound or a sweet-tasting mixture of compounds. Furthermore, as meant herein, all carbohydrates or derivatives thereof as contained in the water ice composition as a whole are considered to be part of the sweetener composition. Moreover, as meant herein, all compounds in the water ice composition that are used for the purpose of achieving freezing point depression are considered to be part of the sweetener composition.

The sweetener composition as used in the present invention contains between 10 and 100 wt.% of carbohydrates or derivatives thereof. In order to reach an improved level of tooth-friendliness as compared to traditional water ice compositions, a significant portion of the carbohydrates or derivatives thereof should be essentially non-cariogenic. In an embodiment of the invention, the portion of non-cariogenic carbohydrates or derivatives thereof is such that the water ice composition may be characterised as being 'low in sugar', typically associated with a maximum of 2.5 or 5 wt.% of sucrose. In yet another embodiment of the invention, the portion of non-cariogenic carbohydrates or derivatives thereof is such that the water ice composition may be characterised as being 'sugar-free', a denomination typically associated with the presence of maximum 0.5 wt.% of cariogenic carbohydrates in the water ice composition as a whole. Most preferably indeed is that essentially all the carbohydrates or derivatives thereof in the water ice composition as a whole are non-cariogenic. As is known, a compound such as a carbohydrate or derivative thereof may be characterised as non-cariogenic if consumption thereof does not lead to significant acids formation in the mouth, typically via fermentation of the compound, which in turn can lead to demineralisation of teeth. As quantitative indication of non-cariogenicity of a compound, it is customary to test whether the compound passes the pH Telemetry test, i.e. whether consumption of the compound will not lead to a decrease of the pH in the mouth to a level of 5.7 or lower in that test. Compounds passing the pH Telemetry test are then - and also herein - designated as tooth-friendly.

Most preferably, at least 70, 80, 90, 95, 99, or even at least 99.5 wt.% of all carbohydrates or derivatives thereof in the water ice composition are tooth-friendly.

With a derivative of a carbohydrate is meant a carbohydrate that has undergone a chemical reaction so that it is no longer a true carbohydrate but still is suitable as food ingredient. Known examples of such derivatives are hydrogenated carbohydrates such as isomalt, sorbitol, xylitol, erythritol, mannitol, and maltitol. Hydrogenated carbohydrates are also referred to as polyols.

Carbohydrates or derivatives thereof that are tooth-friendly are as such known. Non-exhaustive examples of such compounds include the carbohydrates isomaltulose, trehalulose and D-tagatose, and the carbohydrate derivatives isomalt, erythritol, and xylitol.

In one preferred embodiment, the water ice composition contains a mixture of a non-cariogenic carbohydrate and a non-cariogenic carbohydrate derivative; a preferred example of such a mixture is the mixture of isomaltulose and erythritol.

In another preferred embodiment, the water ice composition contains no carbohydrates or derivatives thereof that are associated with laxative effects at high dosages. An example of such a compound is isomalt. In a preferred embodiment, the water ice composition contains essentially no carbohydrate derivatives. In yet another preferred embodiment, the sweetener composition contains essentially only isomaltulose and/or D-tagatose as carbohydrates or derivatives thereof.

Isomaltulose, or α-D-Glucopyranosyl-(1 →6)-D-fructose, is an as such known disaccharide compound. Isomaltulose is an isomer of sucrose, the difference being that the linkage between the glucose- and fructose moieties is 1→6, not 1→2 as in sucrose. Isomaltulose occurs in nature, a.o. as a component in honey. For industrial production purposes, isomaltulose may be prepared via an as such known enzymatic rearrangement of sucrose. In the pH telemetry test, isomaltulose is characterised as being tooth-friendly.

D-Tagatose, or (3S,4S,5R)-1,3,4,5,6-Pentahydroxy-hexan-2-one, is an as such known monosaccharide compound. Tagatose occurs in nature. For industrial production purposes, D-tagatose may be prepared from galactose in an as such known isomerisation reaction. In the pH telemetry test, D-tagatose is characterised as being tooth-friendly.

In one embodiment of the invention, the sweetener composition contains isomaltulose and/or D-tagatose, and preferably essentially no further carbohydrates or derivatives thereof.

When the water ice composition of the invention is frozen in order to prepare a water ice, the organoleptic properties of the resulting water ice are influenced by a.o. the freezing point depression effects of the sweetener composition. As is known, the freezing point depression effects of a disaccharide are different from that of a monosaccharide. Preferably, both isomaltulose and D-tagatose are present in the sweetener composition. This has the advantage that a favourable combination of sweetness and mouthfeel in a frozen water ice may be achieved, including an optimal texture upon consumption, i.e. not too long and neither too short.

Most preferably, the water ice composition as a whole contains between 7 and 30 wt.% of isomaltulose and between 3 and 12 wt.% of D-tagatose. In this embodiment, it is preferred that essentially no cariogenic carbohydrates are present.

It was found that the presence of both isomaltulose and D-tagatose in the water ice composition allows for the achieving of a variety of textures in a water ice prepared therewith, depending on the specific amounts of either isomaltulose or D-tagatose in the water ice composition. It was found that increasing the amount of isomaltulose can lead to a shortening and/or hardening of the texture of the water ice. It was furthermore found that increasing the amount of D-tagatose can lead to a lengthening and/or softening of the texture of the water ice.

In a further embodiment of the invention, a desired level of freezing point depression or texture is achieved in that the sweetener composition contains a further compound other than isomaltulose and/or D-tagatose; an example of such a further compound is glycerol, which can be used in amounts lying preferably between 0.1 and 10 wt.% of the water ice composition as a whole.

The sweetener composition according to the invention should provide a certain sweetness to the water ice composition. In a traditional water ice composition, the sweetener composition can consist of sucrose and glucose. As glucose provides hardly any sweetness, the sweetness of this example of a traditional sweetener composition is, on a weight-for-weight basis, typically around 60% of that of sucrose. It is preferred that the sweetener composition of the invention as a whole provides, on a weight-for weight basis, at least 20% of the sweetness of sucrose, and at most 400% of the sweetness of sucrose. More preferably, the sweetener composition provides between 25 or 35 and 300%, between 40 and 250%, between 50 and 200%, or even between 55 or 60 and 150% of the sweetness of sucrose.

Depending on the choice and quantity of the carbohydrate(s) or derivative(s) thereof in the sweetener composition, it may be that these compounds as such provide less than the desired amount of sweetness to the sweetener composition. In such a case, it may be helpful to incorporate other types of sweeteners into the sweetener composition. Examples of such other types of sweeteners are high-intensity sweeteners such as for example aspartame, acesulfame-K, saccharin, sodium cyclamate, sucralose, and rebaudioside A and other Stevia-derived sweeteners, or mixtures of such compounds. In one preferred embodiment, natural high-intensity sweeteners are incorporated; non-limiting examples of such sweeteners include Stevia-derived sweeteners, Brazzein, and Monellin.

Since the sweetener composition can fulfil the criteria of tooth-friendliness, the option is thereby created for the whole of the water ice composition to fulfil these criteria too. Preferably, therefore, the other constituents of the water ice composition are chosen such that they are tooth-friendly. In order to reach the goal that the water ice composition as a whole is tooth-friendly, it may be preferred to ensure that the pH of the water ice composition, as measured at 20°C, is between 5.7, 6.0, 6.5 or 7.0 and 10.0, 9.0, 8.5 or 8.0. However, it is well-known that certain flavours such as for example many fruit flavours are acids. Nevertheless, as is known a water ice product can even then still be considered to be tooth-friendly if the erosive potential is determined to be sufficiently low - i.e. acid exposure not more than 40 mmol H⁺.min in the known standardized test as elaborated on a.o. www.toothfriendly.com.

The invention also relates to a water ice or sorbet or sherbet, prepared from and consisting essentially of the water ice composition according to the invention. The preparation of the water ice or sorbet or sherbet according to the invention may be done by freezing techniques and other techniques such as extrusion that are as such known in the field of water ice preparation. As is known, the choice of terminology: 'water ice', 'sherbet', and 'sorbet' are a.o. determined by the presence and amount of overrun, and by the presence of a small amount of less than 5 wt.% of fat and less than 5 wt.% of protein or MSNF.

The invention is illustrated with the following examples, without being limited thereto.

### Examples 1 - 3 and Comparative Experiment A

For each of four water ice compositions, the ingredients were mixed together using a Silverson high-speed mixer during ten minutes at 8600 rpm and at a temperature of 55 - 60°C. Subsequently, the compositions were placed in a refrigerator and kept at 6°C for 24 hours. Individual samples were then prepared and frozen at 18°C for 48 hours.

The full composition of the water ice compositions is provided in Table 1. In all cases, water ice samples were successfully prepared. The overrun in all samples was 25 vol.%. The water ice samples so obtained were evaluated in a sensory test by a human test panel.

**Table 1 - Water ice compositions**

| Ingredient | A | 1 | 2 | 3 |
|---|---|---|---|---|
| Water | 70,00 | 70,00 | 70,00 | 70,00 |
| Sucrose | 23,00 | 0,00 | 0,00 | 0,00 |
| Isomaltulose | 0,00 | 29,47 | 22,44 | 20,45 |
| D-Tagatose | 0,00 | 0,00 | 7,00 | 9,00 |
| Glucose | 6,47 | 0,00 | 0,00 | 0,00 |
| Stabilizer | 0,33 | 0,33 | 0,30 | 0,30 |
| Lemon Flavour | 0,20 | 0,20 | 0,15 | 0,15 |
| Stevia extract | 0,00 | 0,00 | 0,11 | 0,10 |

| | | | | |
|---|---|---|---|---|
| Legend to Table 1 - All values in Table 1 are weight.% based on the whole of the water ice composition - The Isomaltulose was Palatinose^{®}, supplied by Beneo-Palatinit - The glucose was a glucose syrup 40DE - The stabilizer was Palsgaard 5911 - Flavour: supplied by Givaudan-Roure - The Stevia-extract contained mainly Rebaudioside A, in 80% purity | | | | |

The evaluation of the water ice samples by a human test panel provided the following results:
- The water ice sample made in traditional fashion in Comparative Experiment A provided a good sweetness, noticeable ice crystals, good flavour release and an agreeable texture.
- In the water ice sample according to the invention of Example 1 the ice crystals and the flavour were, compared to Comparative Experiment A, somewhat less noticeable; the water ice sample had a harder and shorter texture.
- The water ice sample of Example 2 was very comparable to that of Comparative Experiment A in taste, sweetness, and texture.
- The water ice sample of Example 3 resembled that of Example 2, however with a longer texture, showing the onset of thread-forming upon consumption.

### Examples 4 - 5 and Comparative Experiment 8

Three water ice products were prepared in the same fashion as described for Examples 1 - 3 and Comparative Experiment A. The compositions were as outlined in Table 2. One major difference with the water ice compositions of Examples 1 - 3 and Comparative Experiment A is that the overall amount of sweetener composition was reduced. Also, the overrun was set at about 40 vol.%.

**Table 2 - Water ice compositions**

| Ingredient | B | 4 | 5 |
|---|---|---|---|
| Water | 77,50 | 77,50 | 77,50 |
| Sucrose | 15,10 | 0,00 | 0,00 |
| Isomaltulose | 0,00 | 16,55 | 14,55 |
| D-Tagatose | 0,00 | 5,00 | 7,00 |
| Glucose | 6,55 | 0,00 | 0,00 |
| Stabilizer | 0,70 | 0,70 | 0,70 |
| Orange Flavour | 0,15 | 0,15 | 0,15 |
| Stevia-extract | 0,00 | 0,10 | 0,10 |

| | | | |
|---|---|---|---|
| Legend to Table 2 - All values in Table 1 are weight.% based on the whole of the water ice composition - The Isomaltulose was Palatinose^{®}, supplied by Beneo-Palatinit - The glucose was a glucose syrup 40DE - The stabilizer was Palsgaard 5919 - Flavour: supplied by Givaudan-Roure - The Stevia-extract contained mainly Rebaudioside A, in 80% purity | | | |

The water ice samples had a pH between 8.1 and 8.3.

## Claims

1. Water ice composition containing between 5 and 40 wt.% of a sweetener composition, whereby the sweetener composition contains between 10 and 100 wt.% of carbohydrates or derivatives thereof, **characterised in that** essentially all the carbohydrates or derivatives thereof are non-cariogenic.

2. Water ice composition according to claim 1, wherein the sweetener composition contains isomaltulose and/or D-tagatose.

3. Water ice composition according to claim 2, wherein the water ice composition as a whole contains between 7 and 30 wt.% of isomaltulose and between 2 and 12 wt.% of D-tagatose.

4. Water ice composition according to any one of claims 1-3. wherein the water ice composition as a whole contains between 0.1 and 10 wt.% glycerol.

5. Water ice composition according to any one of claims 1 - 4, wherein the water ice composition furthermore contains a high-intensity sweetener.

6. Water ice composition according to any one of claims 1 - 5, wherein the water ice composition contains less than 5 wt.% of fat and less than 5 wt.% of proteins.

7. Water ice composition according to any one of claims 1 - 6, wherein the water ice composition fulfils the criteria for tooth-friendliness when measured by means of pH telemetry.

8. Water ice composition according to any one of claims 1 - 7, wherein the pH of the water ice composition lies between 6 and 9.

9. Water ice, sorbet, or sherbet, consisting essentially of the water ice composition of any one of claims 1 - 8.
